# EUROPÄISCHE PATENTSCHRIFT

(11) **EP 2 564 576 B1**
(45) Veröffentlichungstag und Bekanntmachung des Hinweises auf die Patenterteilung: **10.06.2015**
(21) Anmeldenummer: 11712259.8
(22) Anmeldetag: 06.04.2011
(51) Int. Cl.: H04L 29/08, H04L 29/12, H04L 29/06, H04L 12/40, G06F 15/177

(54) **VERFAHREN ZUR BEREITSTELLUNG EINER KOMMUNIKATION FÜR MINDESTENS EIN GERÄT**
METHOD FOR ESTABLISHING A COMMUNICATION FOR AT LEAST ONE DEVICE
PROCÉDÉ D'ÉTABLISSEMENT D'UNE COMMUNICATION POUR AU MOINS UN APPAREIL

(30) Priorität: 27.04.2010 DE 102010028225
(43) Veröffentlichungstag der Anmeldung: 06.03.2013
(73) Patentinhaber: Robert Bosch GmbH, 70442 Stuttgart (DE)
(72) Erfinder: BLASCHKE, Volker, 71642 Ludwigsburg (DE); SCHIRMER, Juergen, 69124 Heidelberg (DE); LOTHSPEICH, Timo, 70839 Gerlingen (DE); LORENZ, Tobias, 71707 Schwieberdingen (DE); SCHROFF, Clemens, 76703 Kraichtal (DE)
(86) Internationale Anmeldenummer: PCT/EP2011/055302
(87) Internationale Veröffentlichungsnummer: WO 2011/134761

(56) Entgegenhaltungen:
- WO-A1-03/021910
- WO-A1-2009/059965
- US-A1- 2001 051 863
- MAIHOFER C ET AL: "Design alternatives for IP in vehicles", VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, Bd. 3, 22. April 2003 (2003-04-22), Seiten 1783-1787, XP010862500, DOI: DOI:10.1109/VETECS.2003.1207130 ISBN: 978-0-7803-7757-8
- MEHRNOUSH RAHMANI ET AL: "Traffic Shaping for Resource-Efficient In-Vehicle Communication", IEEE TRANSACTIONS ON INDUSTRIAL INFORMATICS, IEEE SERVICE CENTER, NEW YORK, NY, US, Bd. 5, Nr. 4, 1. November 2009 (2009-11-01), Seiten 414-428, XP011268818, ISSN: 1551-3203, DOI: DOI:10.1109/TII.2009.2019127

## Beschreibung

Die Erfindung betrifft ein Verfahren zur Bereitstellung einer Kommunikation für mindestens ein Gerät, ein Gerät und ein Netzwerk.

### Stand der Technik

In einem Kraftfahrzeug werden Steuergeräte eingesetzt, die nach Funktionsdomänen geordnet sind. Diese Steuergeräte kommunizieren unter Nutzung einer gemeinsamen Kommunikationstechnologie untereinander. Hier kommt als Bussystem üblicherweise ein CAN-Bus (Controller Area Network) oder ein FlexRay-Bus zum Einsatz. Bei Bussystemen bzw. Busanordnungen, die für Kraftfahrzeuge verwendet werden, findet eine physikalische Trennung von Kommunikationsdomänen, die den Funktionsdomänen zugeordnet sind, statt. Um dennoch eine Kommunikation zwischen den Kommunikationsdomänen untereinander zu ermöglichen, werden Gateways bzw. Protokollumsetzer eingesetzt.

Im Gegensatz dazu ist es bei IP (Internet Protocol)-Netzwerken üblich, lediglich eine logische Trennung vorzunehmen. Hierzu lässt sich ein Teil der IP-Adresse eines Kommunikationsknotens als Netzwerkadresse markieren. Knoten mit gleicher Netzwerkadresse können innerhalb des dadurch entstehenden IP-Subnetzwerks bzw. Teilnetzwerks eine Kommunikation durchführen. Somit kann auch eine Kommunikation zwischen mehreren Subnetzwerken erfolgen.

XP010862500 offenbart IP-Teilnetzwerke in Kraftfahrzeugen.

### Offenbarung der Erfindung

Vor diesem Hintergrund werden ein Verfahren, wie in Anspruch 1 offenbart, und ein Netzwerk, wie in Anspruch 5 offenbart, mit den Merkmalen der unabhängigen Patentansprüche 1 und 5 vorgestellt. Weitere Ausgestaltungen der Erfindung ergeben sich aus den abhängigen Patentansprüchen und der Beschreibung.

Mit dem Verfahren können für Geräte, die in eine Kraftfahrzeug angeordnet und über ein Netzwerk miteinander verbunden sind, Domänen festgelegt werden und gemäß einer Adressierung nach dem Internetprotokoll (IP) ein IP-Subnet Mapping bzw. eine IP-Teilnetz-Abbildung der festgelegten Domänen durchgeführt werden. Dabei ist u. a. vorgesehen, dass eine Zuordnung mindestens eines Geräts zu mindestens einem Teilnetzwerk erfolgt. Dabei können die Geräte des Netzwerks mehreren Funktionsgruppen zugeordnet sein, wobei jede Funktionsgruppe einem Teilnetzwerk zugeordnet ist. Falls ein Gerät mehreren Funktionsgruppen und somit Teilnetzwerken zugeordnet ist, weist es für jedes Teilnetzwerk eine IP-Adresse auf. Ein Gerät kann innerhalb des Netzwerks und/oder des Teilnetzwerks auch als Knoten bzw. Teilnehmer bezeichnet werden.

Mit der Erfindung kann u. a. berücksichtigt werden, dass beim Ändern der bestehenden Vernetzungstechnologie, bei der CAN- oder FlexRay-Busse verwendet werden, hin zu einem Ethernet-Netzwerk eine Zuordnung der bisherigen Funktionsdomänen von Geräten zu IP-Subnetzwerken bzw. Teilnetzwerken erfolgt.

Alternativ lässt sich auch eine Zuordnung nach Funktionsgruppen vornehmen. Beispielsweise lassen sich so als Sensoren ausgebildete Geräte und als Aktuatoren ausgebildete Geräte unter Berücksichtigung ihrer Funktionen getrennten Teilnetzwerken zuordnen.

In beiden Fällen kann hierdurch auf bisherige Gateways bzw. Protokollübersetzer verzichtet werden. Eine logische Trennung führt bei der üblichen Verwendung von Verteilern (Switches) nicht zu einem erhöhten Kommunikationsaufkommen an einem Knoten und somit einem Gerät eines Teilnetzwerks des Netzwerks. Typischerweise werden die Daten nur an die dem jeweiligen IP-Subnetzwerk zugeordneten Knoten und somit Geräten gesendet, wodurch eine Eingrenzung des Kommunikationsaufkommens auf das relevante Teilnetzwerk mit entsprechend zugeordneten relevanten Geräten erfolgt.

In Ausgestaltung der Erfindung kann ein Gerät als ein Steuergerät (ECU) ausgebildet sein, das dazu ausgebildet ist, Funktionen mindestens einer Komponente des Kraftfahrzeugs zu kontrollieren und somit zu steuern und/oder zu regeln und indem Kraftfahrzeug angeordnet ist. Ein derartiges Steuergerät kann zumindest einem Teilnetzwerk und somit auch mehreren Teilnetzwerken des gesamten Netzwerks zugeordnet sein. Dabei ist es möglich, dass dem Steuergerät für jedes Teilnetzwerk eine eigene, in der Regel als IP-Adresse ausgebildete Adresse zugewiesen wird.

Eine Konfiguration des Protokollumsetzers entfällt, weil die Knoten bzw. Teilnehmer des Netzwerks bedarfsgerecht weitere Adressen anderer Teilnetzwerke erhalten können. Bei der Einführung neuer domänenübergreifender Funktionen ist somit nur noch das jeweilige, üblicherweise als Steuergerät ausgebildete Gerät, anzupassen, nicht jedoch zusätzlich der Protokollumsetzer.

Die beschriebene Zuordnung erfolgt auf Grundlage der IP-Technologie und ist somit unabhängig eines Protokolls, das einer zweiten Schicht bzw. Sicherungsschicht für eine Datenübermittlung (Data Link Layer) nach den OSI-Schichten bzw. OSI-Referenzmodell zugrundeliegt. Es ist also unerheblich, ob im Netzwerk Ethernet, MOST (Media Oriented Systems Transport) oder andere IP-fähige Übertragungsverfahren zum Einsatz kommen.

Das Internetprotokoll ist im ISO/OSI-Modell in der dritten Schicht, d. h. der Vermittlungs- bzw. Netzwerkschicht (Network Layer), angeordnet. Üblicherweise vorgesehene zweite Schichten (Data Link Layer) sind Ethernet, MOST und WirelessLAN. Das Internetprotokoll (IP) wird in der Regel in zwei Versionen verwendet. Bei dem Internetprotokoll der Version 4 (IPv4) werden 32 Bit lange Adressen verwendet. Bei dem Internetprotokoll der Version 6 (IPv6) sind die Adressen 128 Bit lang. Unabhängig davon besteht jede IP-Adresse aus zwei Teilen, nämlich der Hostadresse und der Netzwerkadresse. Alle Knoten bzw. Teilnehmer und somit Geräte im selben Teilnetzwerk können miteinander über die Netzwerkadressen kommunizieren. Die Hostadresse wird zum Identifizieren des Geräts verwendet.

In einer möglichen Ausgestaltung kann eine Kraftfahrzeugtopologie und demnach ein Kraftfahrzeugnetzwerk vier Domänen und somit Funktionsgruppen bzw. Teilnetzwerke umfassen, nämlich für den Antriebsstrang (Powertrain), für das Fahrgestell (Chassis), für das Gehäuse sowie den Innenraum (Body & Cabin) und für Zusatzgeräte (Comfort). Wird diese Topologie in IP-Teilnetzwerken umgesetzt, kann beispielsweise die in Tabelle 1 gezeigte Zuordnung nach CIDR (Classless Inter-Domain Routing) vorgenommen werden.

**Tabelle 1**

| IP-Teilnetzwerk (CIDR-Notation) | Domäne |
|---|---|
| 10.0.0.0/8 | Privater Adressraum des gesamten Netzwerks für das Kraftfahrzeug |
| 10.1.0.0/16 | Privater Adressraum eines Teilnetzwerks für den Antriebstrang |
| 10.2.0.0/16 | Privater Adressraum eines Teilnetzwerks für das Fahrgestell |
| 10.3.0.0/16 | Privater Adressraum eines Teilnetzwerks für Gehäuse und Innenraum |
| 10.4.0.0/16 | Privater Adressraum eines Teilnetzwerks für Zusatzgeräte |

Bei diesem Beispiel wird das IP-Subnetzwerk 10.0.0.0/8, das von der IANA (Internet Assigned Numbers Authority) für private Netzwerke vorgesehen ist, verwendet. Dieses Netzwerk wird in 256 Teil- bzw. Subnetzwerke untergliedert, von denen vier für funktionelle Domänen entsprechend der in Tabelle 1 angeführten Funktionsgruppen und somit Teilnetzwerken genutzt werden.

In jedem dieser Teilnetzwerke verbleiben somit noch 16 Bit für die Adressierung der jeweiligen Knoten und somit Geräte. Somit sind annähernd 65536 IP-Adressen in jeder Domäne, üblicherweise Funktionsdomäne, möglich.

Ein Gerät kann als Knoten des Netzwerks nach Bedarf in mehreren Teil- bzw. Subnetzwerken vertreten sein und somit mehrere IP-Adressen aufweisen. In einer Ausgestaltung kann jedes Gerät eine IP-Adresse aus jedem der 256 möglichen IP-Teilnetzwerke aufweisen.

Jedes Gerät benötigt zur Kommunikation zumindest eine IP-Adresse. Diese ist Bestandteil von jedem empfangen oder gesendeten Datenpaket (IP-Paket) eines Geräts. Weiterhin weist jedes Gerät eine IP-Adresse für ein Teilnetzwerk auf. Ein Einsatz der Erfindung ist bei jeglicher Art von IP-Netzwerken in Kraftfahrzeugen möglich.

Durch Nutzung des IP bzw. Internetprotokolls für das Netzwerk wird für eine Adressierung von Geräten lediglich eine logische Trennung vorgenommen. Hierzu lässt sich ein Teil der IP-Adresse eines Kommunikationsknotens als Netzwerkadresse markieren. Geräte mit gleicher Netzwerkadresse können innerhalb des dadurch entstehenden IP-Teilnetzwerks eine Kommunikation durchführen. Soll für ein Gerät eine Kommunikation in mehreren Teilnetzwerken erfolgen, so können diesem Gerät mehrere Adressen zugewiesen werden.

Das erfindungsgemäße Netzwerk kann mindestens ein erfindungsgemäßes Gerät aufweisen. Dieses mindestens eine Gerät und somit das Netzwerk ist dazu ausgebildet, sämtliche Schritte des vorgestellten Verfahrens durchzuführen. Dabei können einzelne Schritte dieses Verfahrens auch von dem mindestens einen Gerät des Netzwerks durchgeführt werden. Weiterhin können Funktionen des Netzwerks oder Funktionen von dem mindestens einen Gerät als Schritte des Verfahrens umgesetzt werden. Außerdem ist es möglich, dass Schritte des Verfahrens als Funktionen des mindestens einen Geräts oder des gesamten Netzwerks realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Figur 1 zeigt in schematischer Darstellung ein Beispiel für einen Aufbau von IPv4-Adressen, die nach dem Internetprotokoll der Version 4 ausgebildet sind.
Figur 2 zeigt in schematischer Darstellung ein Beispiel für einen nach dem Internetprotokoll der Version 4 ausgebildeten Kopfdatenbereich.
Figur 3 zeigt in schematischer Darstellung ein Beispiel für einen nach dem Internetprotokoll der Version 6 ausgebildeten Kopfdatenbereich.
Figur 4 zeigt in schematischer Darstellung eine Ausführungsform eines erfindungsgemäßen Netzwerks.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

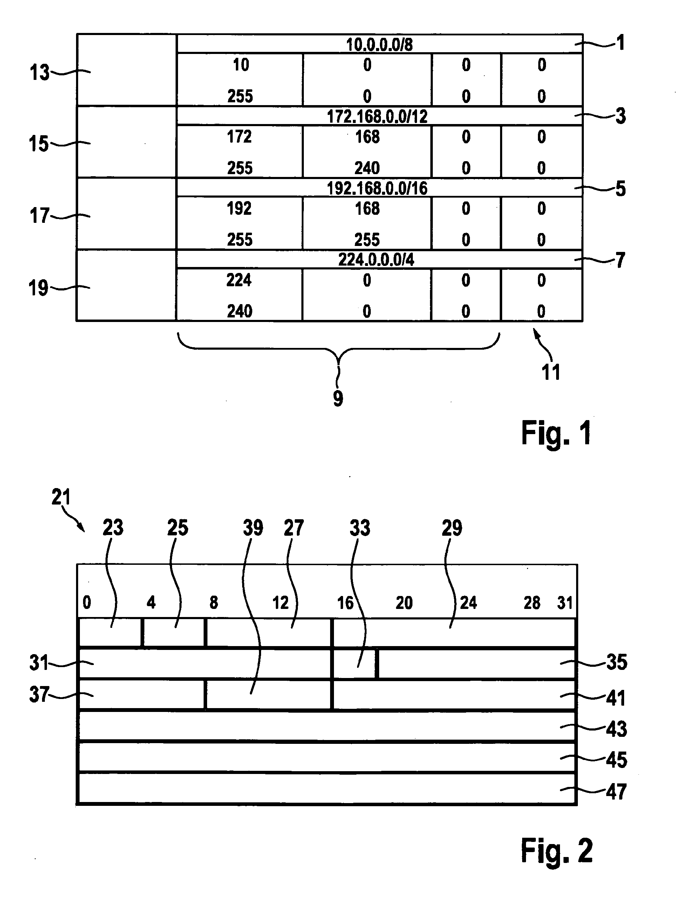

Figur 1 zeigt in schematischer Darstellung ein Diagramm eine Aufteilung von unterschiedlichen Adressen 1, 3, 5, 7, die hier als IPv4-Adressen für ein Internetprotokoll nach Version 4 vorgesehen sind und jeweils einen Subnetz- bzw. Teilnetz-Anteil 10 und einen Host- bzw. Datenanbieter-Anteil 11 umfassen. Hierbei ist eine Vergabe der Adressen 1, 3, 5, 7 nach dem Classless Inter-Domain Routing-Verfahren, kurz CIDR, und somit nach einem Verfahren zur domainübergreifenden Nachrichtenübermittlung vorgesehen.

Hierbei erfolgt bei einer Ausführung des erfindungsgemäßen Verfahrens zur Bereitstellung eines Netzwerks für ein Kraftfahrzeug eine Strukturierung bzw. Aufteilung des gesamten Netzwerks in vier Teilnetzwerke 13, 15,17,19.

Dabei ist ein erstes Netzwerk 12 als sogenanntes privates Netzwerk der Klasse A aufgeteilt und erhält die Adresse 1 "10.0.0.0./8" mit einem Wertebereich von 0 bis 255 pro Block. Ein zweites Teilnetzwerk 15 ist in der beschriebenen Ausführungsform der Erfindung als privates Netzwerk der Klasse B ausgebildet, dem hier die Adresse 3 "172.168.0.0/12" zugeordnet ist. Ein drittes Teilnetzwerk 17 ist als privates Netzwerk der Klasse C ausgebildet und weist die Adresse 5 "192.168.0.0/16" auf. Dem zweiten Teilnetzwerk 15 und dem dritten Teilnetzwerk 17 sind pro Block ebenfalls Wertebereiche von 0 bis 255 zugeordnet. Ein viertes Netzwerk 19 ist als privates Netzwerk der Klasse D ausgebildet und weist die Adresse 7 "224.0.0.0./4" sowie einen Wertebereich von 0 bis 240 pro Block auf.

Figur 2 zeigt in schematischer Darstellung ein Beispiel für einen als IPv4-Kopfdatenbereich ausgebildeten Kopfdatenbereich 21 und somit für einen Header, wie er bei einem Internetprotokoll der Version 4 (IPv4) als Einleitung eines zu versendenden Datenpakets (Frame) verwendet wird.

Dieser Kopfdatenbereich 21 mit einer Breite von 32 Bit umfasst eine Angabe über eine Version 23 des Kopfdatenbereichs 21 mit einer Breite von 4 Bit, eine Information zu einer Länge 25 des Datenpakets mit einer Breite von 4 Bit, wobei diese Länge 25 auch als IHL für IP Header Length abgekürzt wird, eine Information über einen Servicetyp 27 (TOS, Type of Service) mit einer Breite von 8 Bit sowie eine Information über eine Gesamtlänge 29 des Datenpakets mit einer Breite von 16 Bit.

Weiterhin umfasst der Kopfdatenbereich 21 eine Identifikation 31 mit einer Breite von 16 Bit, einen Kontrollschalter 33 (Flag) mit einer Breite von 3 Bit und eine Information über eine Fragmentierung 35 (Fragment Offset) mit einer Breite von 13 Bit. Außerdem ist hier eine Information über eine Lebensdauer 37 (Time to Live, TTL) des Datenpakets mit einer Breite von 8 Bit, eine Information über das im Rahmen der Ausgestaltung der Erfindung verwendete Internetprotokoll 39 mit einer Breite von 8 Bit und eine Prüfsumme 41 mit einer Breite von 16 Bit vorgesehen. Der hier dargestellte Kopfdatenbereich 21 nach dem Internetprotokoll 39 der Version 4 umfasst auch eine Information über eine Quelladresse 43, eine Zieladresse 45 und ggf. mindestens eine Information zu weiteren Optionen 47, die jeweils eine Breite von 32 Bit aufweisen.

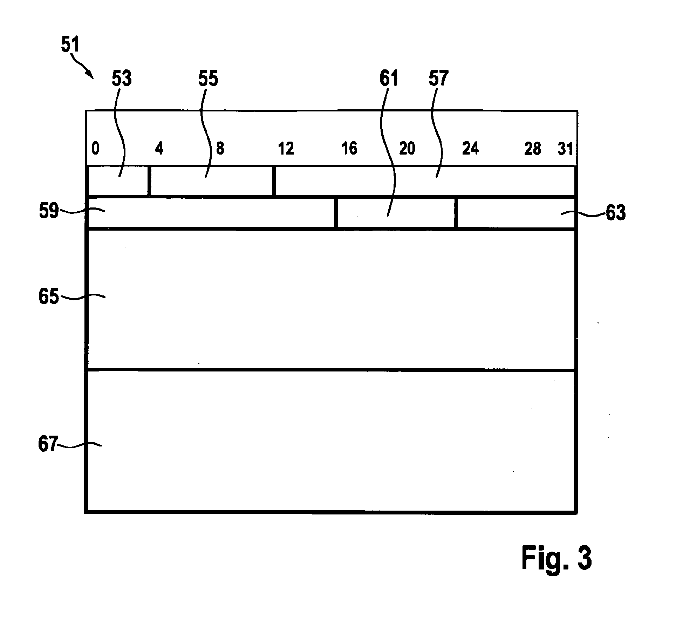

Ein Kopfdatenbereich 51 für ein Datenpaket (Frame) eines Internetprotokolls der Version 6 (IPv6) ist in Figur 3 schematisch dargestellt. Dieser als IPv6-Kopfdatenbereich ausgebildete Kopfdatenbereich 51 bzw. Header umfasst eine Information über eine Version 53 mit einer Breite von 4 Bit, eine Information über eine Prioritätsvergabe 55 (Traffic Class) mit einer Breite von 8 Bit, eine Information zu einem Fließwert 57 (Flow Label) mit einer Breite von 20 Bit, eine Information über eine Länge 59 eines Inhalts des als IPv6-Datenpaket ausgebildeten Datenpakets mit einer Breite von 16 Bit, eine Information zur Identifizierung 61 eines nachfolgenden Kopfdatenbereichs mit einer Breite von 8 Bit und eine Information über eine maximale Anzahl an Zwischenschritten 63 (Hop Limit), die das zugeordnete Datenpaket über einen Router zurücklegen darf, mit einer Breite von 8 Bit. Außerdem umfasst der gezeigte IPv6-Kopfdatenbereich 51 eine Quelladresse 65 und eine Zieladresse 67, die jeweils eine Breite von 128 Bit aufweisen.

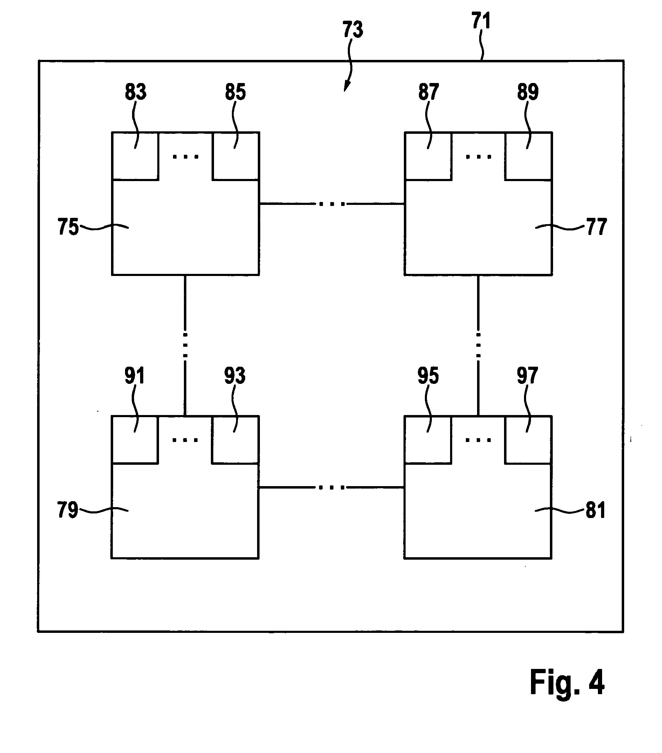

Figur 4 zeigt in schematischer Darstellung ein Kraftfahrzeug 71, das eine Ausführungsform eines erfindungsgemäßen Netzwerks 73 umfasst. Dieses Netzwerk 73 weist mehrere miteinander verbundene Ausführungsformen erfindungsgemäßer Geräte 75, 77, 79, 81 auf, die in dem Kraftfahrzeug 71 angeordnet sind, wobei mindestens eines dieser Geräte 75, 77, 79, 81 als Steuergerät (ECU) für zumindest eine hier nicht dargestellte Komponente des Kraftfahrzeugs 71 ausgebildet ist. Innerhalb des Netzwerks 73 tauschen die dargestellten Geräte 75, 77, 79, 81 Daten und somit Informationen über ein Internetprotokoll aus.

Weiterhin können Geräte 75, 77, 79, 81 als Sensoren zum Erfassen von Zuständen von Betriebsparametern des Kraftfahrzeugs oder Aktuatoren zum Beaufschlagen von Komponenten des Kraftfahrzeugs ausgebildet sein. Es ist auch möglich, dass zumindest ein hier beschriebenes Gerät 75, 77, 79, 81 nicht als Steuergerät sondern als Kommunikationsgerät, bspw. Antenne, Radio oder Navigationsgerät, ausgebildet ist, das dazu ausgebildet sein kann, mit der Außenwelt Daten auszutauschen und/oder dem Fahrer Informationen, die ggf. auf den ausgetauschten Daten beruhen, bereitzustellen.

Dabei ist einem ersten Gerät 75 eine erste als Internetadresse ausgebildete Adresse 83 sowie mindestens eine n-te als Internetadresse ausgebildete Adresse 85 zugeordnet. Dem zweiten Gerät 77 ist ebenfalls eine erste als Internetadresse 87 sowie mindestens eine n-te als Internetadresse ausgebildete Adresse 89 zugeordnet. Einem dritten Gerät 79 ist eine erste als Internetadresse ausgebildete Adresse 91 sowie mindestens eine n-te als Internetadresse ausgebildete Adresse 93 zugeordnet. Einem vierten Gerät 81 ist eine erste als Internetadresse ausgebildete Adresse 95 sowie eine n-te als Internetadresse ausgebildete Adresse 97 zugeordnet.

Durch die im Rahmen einer Ausführungsform des erfindungsgemäßen Verfahrens vorgesehene Zuordnung mehrerer Adressen 83, 85, 87, 89, 91, 93, 95, 97 für ein Gerät 75, 77, 79, 81 kann jedes Gerät 75, 77, 79, 81 verschiedenen Teilnetzwerken und somit Funktionsgruppen des gesamten Netzwerks 73 zugeordnet werden. Abhängig davon, in welchem Teilnetzwerk ein Datenpaket zwischen Geräten 75, 77, 79, 81 ausgetauscht wird, wird als Quelladresse und/oder Zieladresse eine einem jeweiligen Teilnetzwerk zugeordnete Adresse 83, 85, 87, 89, 91, 93, 95, 97 eines jeweiligen Geräts 75, 77, 79, 81 verwendet. Mit der Zuordnung von Geräten 75, 77, 79, 81 zu unterschiedlichen Teilnetzwerken und somit Funktionsgruppen werden funktionelle Eigenschaften der Geräte 75, 77, 79, 81 berücksichtigt.

## Patentansprüche

1. Verfahren zur Bereitstellung einer Kommunikation für mindestens ein Gerät (75, 77, 79, 81), das für ein Kraftfahrzeug (71) vorgesehen ist und über ein Netzwerk (73) des Kraftfahrzeugs (71) mit mindestens einem weiteren Gerät (75, 77, 79, 81) verbunden wird, bei dem Daten zwischen dem mindestens einen Gerät (75, 77, 79, 81) und dem mindestens einen weiteren Gerät (75, 77, 79, 81) über ein Internetprotokoll (39) ausgetauscht werden,
bei dem dem mindestens einen Gerät (75, 77, 79, 81) zumindest eine Adresse (83, 85, 87, 89, 91, 93, 95, 97) zugeordnet wird, wobei die zumindest eine Adresse (83, 85, 87, 89, 91, 93, 95, 97) des mindestens einen Geräts (75, 77, 79, 81) in zumindest eine Hostadresse und zumindest eine Netzwerkadresse unterteilt wird,
bei dem das Netzwerk (73) in mehrere Teilnetzwerke unterteilt wird, wobei das mindestens eine Gerät (75, 77, 79, 81) zumindest einem Teilnetzwerk zugeordnet wird,
bei dem das mindestens eine Gerät (75, 77, 79, 81) zumindest einer Funktionsgruppe zugeordnet wird, wobei jede Funktionsgruppe einem Teilnetzwerk zugeordnet wird,
**dadurch gekennzeichnet, dass** das Netzwerk (73) vier Teilnetzwerke umfasst, wobei den vier Teilnetzwerken die Funktionsgruppen Antriebsstrang, Gehäuse und Innenraum, Fahrgestell, sowie Zusatzgeräte des Kraftfahrzeugs zugeordnet sind.

2. Verfahren nach Anspruch 1, bei dem Daten, die nur für ein Teilnetzwerk vorgesehen sind, nur an mindestens ein Gerät (75, 77, 79, 81), das dem jeweiligen Teilnetzwerk zugeordnet wird, übermittelt werden.

3. Verfahren nach einem der voranstehenden Ansprüche, das für mindestens ein als Steuergerät ausgebildetes Gerät (75, 77, 79, 81) durchgeführt wird, wobei das mindestens eine Gerät (75, 77, 79, 81) zum Steuern von mindestens einer Komponente des Kraftfahrzeugs (71) ausgebildet ist.

4. Verfahren nach einem der voranstehenden Ansprüche, mit dem ein Netzwerk (73) für ein Kraftfahrzeug (71) betrieben wird, wobei über das Netzwerk (72) mindestens zwei Geräte (75, 77, 79, 81), die für das Kraftfahrzeug (71) vorgesehen sind, miteinander verbunden werden.

5. Netzwerk für ein Kraftfahrzeug (71), das dazu ausgebildet ist, mindestens ein erstes Gerät (75, 77, 79, 81) das für das Kraftfahrzeug (71) vorgesehen ist, mit mindestens einem weiteren Gerät (75, 77, 79, 81), das für das Kraftfahrzeug (71) vorgesehen ist, zu verbinden, wobei die Geräte (75, 77, 79, 81) dazu ausgebildet sind, Daten über ein Internetprotokoll (39) auszutauschen,
wobei dem ersten Gerät (75, 77, 79, 81) zumindest eine Adresse (83, 85, 87, 89, 91, 93, 95, 97) zugeordnet ist, wobei die zumindest eine Adresse (83, 85, 87, 89, 91, 93, 95, 97) des ersten Geräts (75, 77, 79, 81) in zumindest eine Hostadresse und zumindest eine Netzwerkadresse unterteilt ist,
wobei das Netzwerk (73) in mehrere Teilnetzwerke unterteilt wird, wobei das mindestens eine Gerät (75, 77, 79, 81) zumindest einem Teilnetzwerk zugeordnet ist,
wobei das mindestens eine Gerät (75, 77, 79, 81) zumindest einer Funktionsgruppe zugeordnet ist, wobei jede Funktionsgruppe einem Teilnetzwerk zugeordnet ist,
**dadurch gekennzeichnet, dass** das Netzwerk (73) vier Teilnetzwerke umfasst, wobei den vier Teilnetzwerken die Funktionsgruppen Antriebsstrang, Gehäuse und Innenraum, Fahrgestell, sowie Zusatzgeräte des Kraftfahrzeugs zugeordnet sind.

## Claims

1. Method for providing communication for at least one device (75, 77, 79, 81) which is intended for a motor vehicle (71) and is connected to at least one further device (75, 77, 79, 81) via a network (73) of the motor vehicle (71), in which data are interchanged between the at least one device (75, 77, 79, 81) and the at least one further device (75, 77, 79, 81) using an Internet protocol (39),
in which at least one address (83, 85, 87, 89, 91, 93, 95, 97) is assigned to the at least one device (75, 77, 79, 81), the at least one address (83, 85, 87, 89, 91, 93, 95, 97) of the at least one device (75, 77, 79, 81) being divided into at least one host address and at least one network address,
in which the network (73) is divided into a plurality of subnetworks, the at least one device (75, 77, 79, 81) being assigned to at least one subnetwork,
in which the at least one device (75, 77, 79, 81) is assigned to at least one functional group, each functional group being assigned to a subnetwork,
**characterized in that** the network (73) comprises four subnetworks, the functional groups of drive train, housing and interior, chassis and additional devices of the motor vehicle being assigned to the four subnetworks.

2. Method according to Claim 1, in which data which are intended only for one subnetwork are transmitted only to at least one device (75, 77, 79, 81) assigned to the respective subnetwork.

3. Method according to one of the preceding claims, which is carried out for at least one device (75, 77, 79, 81) in the form of a control device, the at least one device (75, 77, 79, 81) being designed to control at least one component of the motor vehicle (71).

4. Method according to one of the preceding claims, which is used to operate a network (73) for a motor vehicle (71), at least two devices (75, 77, 79, 81) which are intended for the motor vehicle (71) being connected to one another via the network (72).

5. Network for a motor vehicle (71), which is designed to connect at least one first device (75, 77, 79, 81) which is intended for the motor vehicle (71) to at least one further device (75, 77, 79, 81) which is intended for the motor vehicle (71), the devices (75, 77, 79, 81) being designed to interchange data using an Internet protocol (39),
at least one address (83, 85, 87, 89, 91, 93, 95, 97) being assigned to the first device (75, 77, 79, 81), the at least one address (83, 85, 87, 89, 91, 93, 95, 97) of the first device (75, 77, 79, 81) being divided into at least one host address and at least one network address,
the network (73) being divided into a plurality of subnetworks, the at least one device (75, 77, 79, 81) being assigned to at least one subnetwork,
the at least one device (75, 77, 79, 81) being assigned to at least one functional group, each functional group being assigned to a subnetwork,
**characterized in that** the network (73) comprises four subnetworks, the functional groups of drive train, housing and interior, chassis and additional devices of the motor vehicle being assigned to the four subnetworks.

## Revendications

1. Procédé d'établissement d'une communication pour au moins un appareil (75, 77, 79, 81) prévu pour un véhicule automobile (71) et raccordé à au moins un autre appareil (75, 77, 79, 81) par l'intermédiaire d'un réseau (73) du véhicule automobile (71), et dans lequel des données sont échangées entre le ou les appareils (75, 77, 79, 81) et le ou les autres appareils (75, 77, 79, 81) par l'intermédiaire d'un protocole Internet (39),
au moins une adresse (83, 85, 87, 89, 91, 93, 95, 97) étant attribuée à l'appareil ou aux appareils (75, 77, 79, 81), la ou les adresses (83, 85, 87, 89, 91, 93, 95, 97) du ou des appareils (75, 77, 79, 81) étant divisées en au moins une adresse d'hôte et au moins une adresse de réseau,
le réseau (73) étant divisé en plusieurs sous-réseaux, le ou les appareils (75, 77, 79, 81) étant associés à au moins un sous-réseau,
le ou les appareils (75, 77, 79, 81) étant associés à au moins un groupe fonctionnel, chaque groupe fonctionnel étant associé à un sous-réseau, **caractérisé en ce que**
le réseau (73) comporte quatre sous-réseaux et
**en ce que** les groupes fonctionnels train d'entraînement, habitacle et espace intérieur, châssis et appareils supplémentaires du véhicule automobile sont associés aux quatre sous-réseaux.

2. Procédé selon la revendication 1, dans lequel les données prévues pour un seul sous-réseau ne sont transmises qu'à au moins un appareil (75, 77, 79, 81) associé au sous-réseau concerné.

3. Procédé selon l'une des revendications précédentes, exécuté pour au moins un appareil (75, 77, 79, 81) configuré comme appareil de commande, le ou les appareils (75, 77, 79, 81) étant configurés pour commander au moins un composant du véhicule automobile (71).

4. Procédé selon l'une des revendications précédentes, par lequel un réseau (73) de véhicule automobile (71) est géré, au moins deux appareils (75, 77, 79, 81) prévus pour le véhicule automobile (71) étant reliés l'un à l'autre par l'intermédiaire du réseau (72).

5. Réseau pour véhicule automobile (71), configuré pour relier au moins un appareil (75, 77, 79, 81) prévu pour le véhicule automobile (71) à au moins un autre appareil (75, 77, 79, 81) prévu pour le véhicule automobile (71), le ou les appareils (75, 77, 79, 81) étant configurés pour échanger des données par l'intermédiaire d'un protocole Internet (39),
au moins une adresse (83, 85, 87, 89, 91, 93, 95, 97) étant attribuée à l'appareil ou aux appareils (75, 77, 79, 81), la ou les adresses (83, 85, 87, 89, 91, 93, 95, 97) du premier appareil (75, 77, 79, 81) étant divisées en au moins une adresse d'hôte et au moins une adresse de réseau,
le réseau (73) étant divisé en plusieurs sous-réseaux, le ou les appareils (75, 77, 79, 81) étant associés à au moins un sous-réseau,
le ou les appareils (75, 77, 79, 81) étant associés à au moins un groupe fonctionnel, chaque groupe fonctionnel étant associé à un sous-réseau, **caractérisé en ce que**
le réseau (73) comporte quatre sous-réseaux et
**en ce que** les groupes fonctionnels train d'entraînement, habitacle et espace intérieur, châssis et appareils supplémentaires du véhicule automobile sont associés aux quatre sous-réseaux.
